# EUROPEAN PATENT SPECIFICATION

(11) **EP 2 327 581 B1**
(45) Date of publication and mention of the grant of the patent: **13.02.2013**
(21) Application number: 09816182.1
(22) Date of filing: 25.09.2009
(51) Int. Cl.: B60K 15/04, E05B 65/12

(54) **LOCKABLE CAP FOR FUEL TANK**
VERSCHLIESSBARE KAPPE FÜR EINEN BRENNSTOFFTANK
CAPUCHON VERROUILLABLE POUR RÉSERVOIR DE CARBURANT

(30) Priority: 25.09.2008 JP 2008246434
(43) Date of publication of application: 01.06.2011
(73) Proprietor: Honda Motor Co., Ltd., Minato-ku Tokyo 107-8556 (JP)
(72) Inventor: KIKUCHI, Susumu, Wako-shi Saitama 351-0193 (JP); HORIE, Kenichi, Hagagun Tochigi 321-3325 (JP)
(74) Representative: Trossin, Hans-Jürgen
(86) International application number: PCT/JP2009/066585
(87) International publication number: WO 2010/035767

(56) References cited:
- WO-A1-98/47787
- DE-A1-102005 041 096
- JP-B- 6 102 470
- JP-B2- 6 102 470
- JP-Y- 2 528 030
- JP-Y2- 5 023 955

## Description

### Technical Field

The present invention relates to a lockable cap for opening and closing a fill opening of a fuel tank.

### Background Art

Lockable caps have a screw part that is capable of being turned by a key. The key is turned to open the fill opening of a fuel tank. In known examples of such lockable caps, the cap spins free (the cap is not openable) when locked using the key for starting the engine, or the cap spins free (the cap is not openable) when locked without using the key.

In the fuel tank cap disclosed in JP6102470B as an example of a cap that does not use a key, since a cylinder lock member inside the cap rotates to a lock position, and is locked when the cap is rotated to the right when tightened, use of the key is allowed during fueling, and various types of electric accessories can be operated during fueling.

In a cap that uses a key, when a cylinder lock is unlocked by the key after the cap is secured, a protrusion on the cylinder lock side (main side) and a groove on the male screw side (driven side) are separated, and the cap cannot be fastened or loosened (see JP 2528030 B2, for example).

However, in the fuel tank cap disclosed in JP6102470B, since the engine can be started without closing the cap, it is possible to start the engine and even begin moving while inadvertently leaving the cap open.

The cap disclosed in JP 2528030 B2 also has drawbacks in that sand or mud can adhere to the threading of the cap when the cap is opened and left sitting or hanging. WO 98/47787 A1 discloses a lockable cap according to the preamble of claim 1.

### Summary of Invention

### Technical Problem

It is an object of the present invention to provide a lockable cap whereby a fuel tank cap can be prevented from being inadvertently left open.

### Solution to Problem

According the present invention, there is provided a lockable cap designed to threadedly engage with a fill opening for opening and closing the fill opening using a key, which cap comprises: a housing cap having a helical portion capable of threaded engagement with the fill opening; an outer cap integrally formed with a key cylinder that allows insertion of the key; a ring stopper for coupling and decoupling the housing cap and the outer cap; and a ratchet mechanism for transmitting rotation from the outer cap to the housing cap and guiding the ring stopper to bend in one direction, wherein the ring stopper couples the housing cap and the outer cap through an opening operation of the cap relative to the fill opening by the key inserted in the key cylinder and uncouples the housing cap and the outer cap by deforming through an action of the ratchet mechanism as closing of the cap is completed.

Preferably, the ring stopper comprises: a pair of slide couplers provided in opposed relation to each other so as to couple to the housing cap; and a pair of retaining protuberances, provided orthogonal to a line passing over the slide couplers, for coupling with the outer cap by an opening operation of the key and for uncoupling from the outer cap by sliding of the slide couplers due to the action of the ratchet mechanism upon completion of a closing operation of the key.

Desirably, the lockable cap further comprises a return cylinder capable of rotation and vertical movement by the key and having an annular groove on an external periphery of a lower end thereof for engaging with and disengaging from the retaining protuberances of the ring stopper.

In a preferred form, the lockable cap further comprising a collar provided continuously with a lower end of the outer cap and having a radius larger than a radius of the fill opening and a length longer than a length of the helical portion of the housing cap so as to cover the housing cap.

The collar may comprise a plurality of drainage ports formed in a top part toward the outer cap.

### Advantageous Effects of Invention

When the lockable cap is completely closed over the fill opening, the ring stopper bends, the outer cap and the housing cap are uncoupled, and the key can be removed. The cap can therefore be prevented from being inadvertently left open.

In particular, the pair of retaining protuberances formed on the internal peripheral surface of the ring stopper engage with the annular groove formed in the return cylinder, whereby the return cylinder is prevented from returning, and the key does not come out. When the cap is closed on the fill opening after fueling, when the outer cap has been tightened to or beyond a certain degree, the ring stopper is bent by the ratchet mechanism, the retaining protuberances of the ring stopper and the groove of the return cylinder are disengaged, and the key can be removed.

Dirt or mud can be prevented by the collar from adhering to the helical portion of the cap even when the cap touches the vehicle body when removed from the fill opening.

Since the collar has a plurality of drainage ports, when sand (dust) or rainwater splashes upward from the vehicle between the outer cap and the collar, and between the collar and the external surface of the fill opening when the fill opening is closed, the sand (dust) or rainwater can be discharged to the outside through the drainage ports. Sand or dust therefore does not adhere between the collar and the external surface of the fill opening.

### Brief Description of Drawings

FIG. 1 is a perspective view showing a lockable cap according to a first embodiment of the present invention;
FIG. 2 is an exploded view of the cap shown in FIG. 1;
FIG. 3A is a perspective view showing a housing cap and ring stopper of FIG. 2 as assembled together;
FIG. 3B is a perspective view showing a return cylinder added to the assembly of FIG. 3A;
FIG. 4A is a perspective view showing an inner ratchet and a ring-shaped guide having a hexagonal external shape assembled with the housing cap of FIG. 3B;
FIG. 4B is a perspective view showing a key cylinder added to the assembly of FIG. 4A;
FIG. 5A is a perspective view showing a key inserted into the assembly of FIG. 4B;
FIG. 5B is a sectional view showing a state in which the key is irremovably inserted as the cap according to the first embodiment is closed on the fill opening;
FIG. 5C is a perspective view showing the housing cap and the key cylinder, in a state in which the key is rotated from the state of FIG. 5A;
FIG. 5D is a perspective view showing the housing cap from which the inner ratchet has been removed from the state of FIG. 5C;
FIG. 5E is a sectional view showing a state in which the ring stopper and the return cylinder are engaged;
FIG. 5F is a perspective view showing the relationship of the inner ratchet, the ring stopper, and the arm as viewed from above;
FIG. 5G is a sectional view showing a state in which the ring stopper is bent in the direction of the arrow a7;
FIG. 5H is a sectional view showing a state in which the connection between the ring stopper and the return cylinder is released as a result of the bending of the ring stopper;
FIG. 6 is a perspective view showing the lockable cap according to a second embodiment of the present invention;
FIG. 7 is an exploded perspective view showing the cap according to the second embodiment shown in FIG. 6;
FIG. 8A is a perspective view showing a state in which the ring stopper and spring are assembled with the housing cap shown in FIG. 7;
FIG. 8B is a perspective view showing a state in which the locking ring and the inner ratchet are further assembled with the housing cap shown in FIG. 8A;
FIG. 9A is a perspective view showing a state in which the return cylinder is further assembled with the housing cap shown in FIG. 8B;
FIG. 9B is a perspective view showing a state in which the guide is fitted in from the state shown in FIG. 9A;
FIG. 10 is a perspective view showing a state in which the key cylinder is added to the assembly shown in FIG. 9B;
FIG. 11 is a perspective view showing the lockable cap according to a third embodiment of the present invention;
FIG. 12A is a perspective view showing the housing cap with the outer cap and inner ratchet removed from the cap shown in FIG. 11;
FIG. 12B is a perspective view showing the housing cap in FIG. 12A as viewed from above;
FIG. 12C is a perspective view showing a state in which the inner ratchet is assembled with the housing cap shown in FIG. 12A;
FIG. 13 is a perspective view showing a cross-section of the outer cap shown in FIG. 11;
FIG. 14 is a perspective view showing the inner ratchet shown in FIG. 11;
FIG. 15A is a sectional view taken along line 15A-15A of FIG. 11;
FIG. 15B is a sectional view taken along line 15B-15B of FIG. 11;
FIG. 16A is a sectional view corresponding to FIG. 15A, showing a state in which the inserted key is not removed;
FIG. 16B is a sectional view corresponding to FIG. 15B, showing a state in which the inserted key is not removed;
FIG. 17A is a partial sectional view of the state of FIG. 16A with the outer cap removed, as viewed from above;
FIG. 17B is a sectional view showing a state in which the connection between the ring stopper and the return cylinder is removed from the state of FIG. 16A;
FIG. 18 is a perspective view showing the lockable cap according to a fourth embodiment of the present invention;
FIG. 19 is a perspective view showing the lockable cap according to a fifth embodiment of the present invention;
FIG. 20 is a perspective view showing the collar of FIG. 9; and
FIG. 21 is a perspective view showing a portion of a vehicle to which the cap according to the fifth embodiment is provided.

### Description of Embodiments

Certain preferred embodiments of the present invention will be described in detail below with reference to the accompanying drawings.

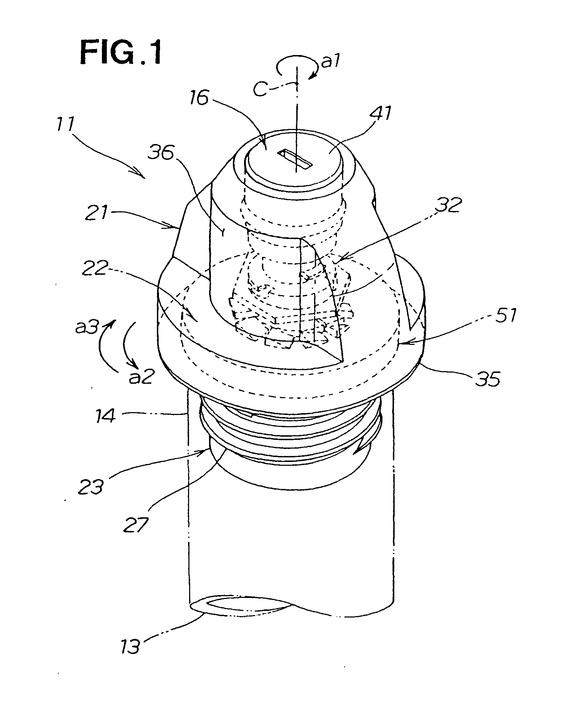

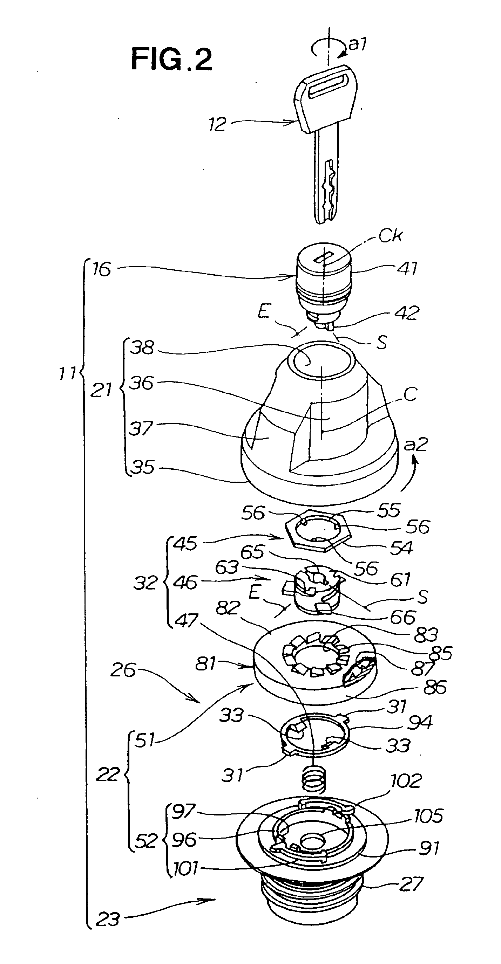

The lockable cap 11 as shown in FIGS. 1 and 2 opens and closes a fill opening 14 of a fuel filler tube 13 that is connected to the fuel tank of a vehicle, for example, through the use of a key 12. The key 12 is used to start an engine.

To open the cap 11, the key 12 is inserted into a key cylinder 16 and rotated in the direction of the arrow a1, after which the cap 11 is loosened by rotating in the direction of the arrow a2.

To close the cap 11, the open cap 11 is tightened in the direction of the arrow a3. The key 12 is able to be removed when the cap 11 is closed.

The cap 11 is provided primarily with a manually rotated outer cap 21 that is exposed on the outside of the vehicle; the key cylinder 16 for allowing insertion of the key 12; a ratchet mechanism 22; a housing cap 23 having a helical portion 27 that screws into or threadedly engages with the fill opening 14; and a ring stopper 26 for coupling and releasing the outer cap 21 and the housing cap 23.

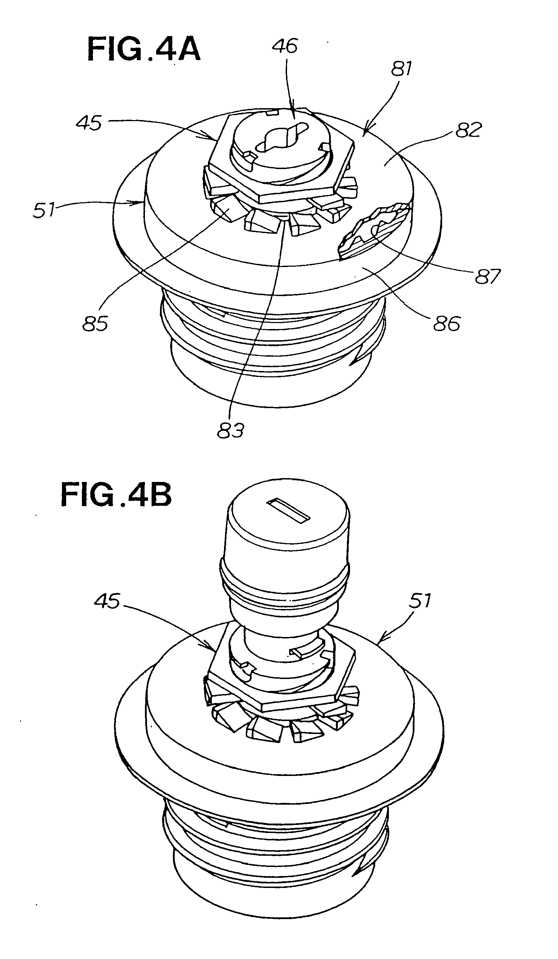

The ring stopper 26 as shown in FIGS. 2 and 3A through 4B is provided with a pair of slide couplers 31 for engaging with the housing cap 23, the slide couplers 31 being provided in positions opposite each other; and a pair of retaining protuberances 33 provided orthogonally to a line that passes through the pair of slide couplers 31. The retaining protuberances 33 connect to a key origin return mechanism 32 for connecting to the ratchet mechanism 22 from the side of the outer cap 21 through the opening operation of the key 12. The retaining protuberances 33 are configured so that the slide couplers 31 are caused to slide in the direction of the line passing through the slide couplers 31 by the ratchet mechanism 22 as the closing operation is completed, whereby the connection to the key origin return mechanism 32 is released.

The outer cap 21 is provided with a cover flange 35 for covering the fill opening 14; a lock fixing part 36 provided on the cover flange 35; and an anti-slip part 37 that protrudes to the outside in the radial direction from the lock fixing part 36. A fitting hole 38 into which the key cylinder 16 fits is formed in the lock fixing part 36.

The key cylinder 16 has a body 41 fixed to the outer cap 21; and a rotating part 42 that protrudes from the lower end of the body 41 and rotates together with the key 12, and is returned to an origin angle position S by the ratchet mechanism 22. The key 12 can be inserted and removed at the origin angle position S, and the key 12 cannot be removed at a locked angle position E.

The key origin return mechanism 32 is composed of a guide 45 that is fixed to the outer cap 21; a return cylinder 46; and a spring 47.

The ratchet mechanism 22 switches between transmitting and not transmitting rotational force from the outer cap 21 to the housing cap 23. The ratchet mechanism 22 is composed of an inner ratchet 51 and a ring stopper release mechanism 52. These components are concentric on the axis line C thereof, and on the axis line Ck of the key cylinder 16.

The external periphery of a plate-shaped body 54 of the guide 45 is formed in a hexagonal shape. An open part 55 is formed in the center of the body 54, and claws 56 are provided so as to protrude toward the center of the open part 55 at three equally spaced internal peripheral positions of the open part 55. The center of the open part 55 and the axis line Ck of the key cylinder 16 coincide, and the outer edge that forms the hexagonal shape of the body 54 is fixed to the lower end of the lock fixing part 36 of the outer cap 21.

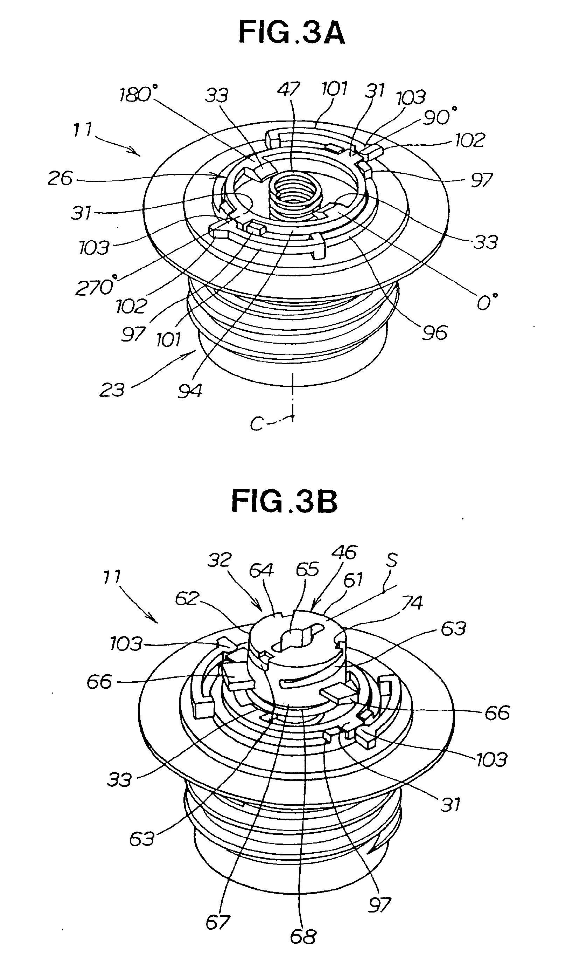

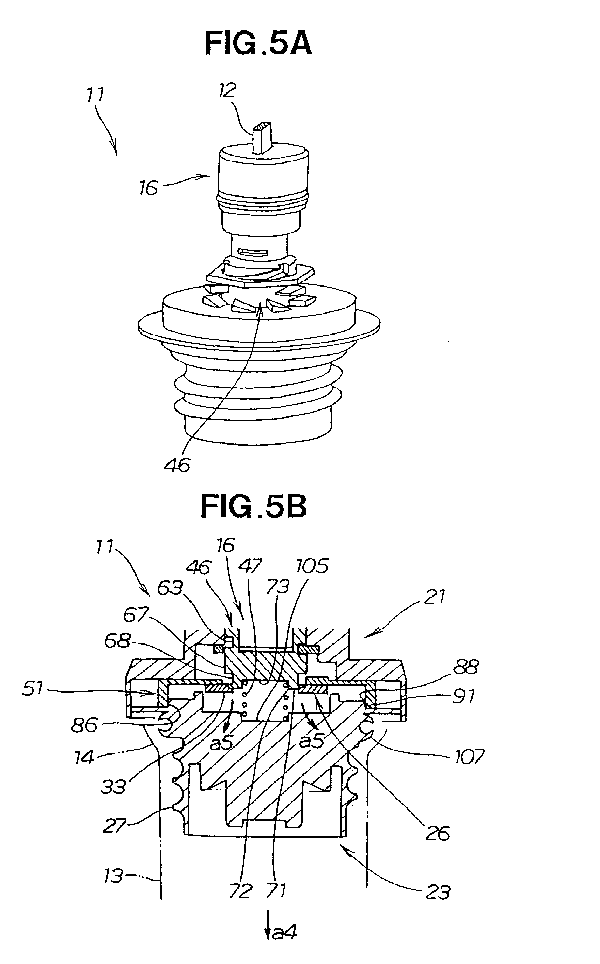

The return cylinder 46 includes a column body 61 formed in a substantially columnar shape. Three guiding helical grooves 63 are formed in the external periphery of an upper end (one end) 62 (FIG. 3B) of the column body 61. The three claws 56 of the guide 45 fit into the guiding helical grooves 63. A fitting cavity 65 is formed in an upper end surface 64 of the return cylinder 46 facing the key cylinder 16. The rotating part 42 of the key cylinder 16 fits in the fitting cavity 65. Engaging bosses 66 are formed in three equally spaced positions on the external periphery of the column body 61 so as to protrude radially outward. A transmitting and interrupting groove 68 is formed in the external periphery of a lower end (other end) 67 of the column body 61 so as to be orthogonal to the axis line of the key cylinder 16. A chamfered tapering guide surface 71 (see FIG. 5B) is formed on the external periphery of the lower end of the column body 61. A first spring retaining cavity 73 is formed in a lower end surface 72 that is continuous with the tapering guide surface 71. The lower end 67 of the column body 61 is positioned inside a circular opening 83 of the inner ratchet 51.

An entry part 74 that is the start of a groove into which the claws 56 are inserted is formed in the upper end surface 64 in each of the guiding helical grooves 63. The engaging bosses 66 are formed so as to be substantially triangular in cross-section.

In the inner ratchet 51, a lower end edge of a body 81 that forms a circular dish shape is placed over an upper surface of the housing cap 23. The body 81 of the inner ratchet 51 has a disk part 82, and the disk part 82 has a circular opening 83 formed so as to be large enough for the return cylinder 46 to pass through the center thereof. A plurality of tooth-shaped first engaging teeth 85 formed on the upper surface of the disk part 82 is arranged along the periphery of the circular opening 83. The plurality of first engaging teeth 85 faces the three engaging bosses 66 provided to the return cylinder 46.

A plurality of second engaging teeth 87 is formed on an internal peripheral surface of a peripheral wall 86 of the body 81 of the inner ratchet 51. The plurality of second engaging teeth 87 is formed toward the disk part 82 on the internal peripheral surface of the peripheral wall 86, and a lower end of the peripheral wall 86 is a fitting part 88 (FIG. 5B) on which the second engaging teeth 87 are not formed. A step part 91 formed on an upper surface of the housing cap 23 fits with the fitting part 88 and facilitates the rotation of the inner ratchet 51. The ring stopper 26 is disposed on a lower surface of the disk part 82.

In the ring stopper 26, the slide couplers 31 and the retaining protuberances 33 are formed on a ring body 94. Specifically, the retaining protuberances 33 are formed on an inside surface of the ring body 94 so as to face each other and protrude inward. The retaining protuberances 33 are shaped (in terms of length, thickness, and width) so as to fit in the annular transmitting and interrupting groove 68 formed in the return cylinder 46. The slide couplers 31 are formed opposite each other on an outside surface of the ring body 94 orthogonal (at angles of 90° and 270°) to the positions (at 0° and 180°) of the retaining protuberances 33, so as to protrude radially outward. The slide couplers 31 are attached to the ring stopper release mechanism 52.

In the ring stopper release mechanism 52, a ring-shaped support base 96 is formed at the top of the housing cap 23 so as to be larger than the ring body 94 of the ring stopper 26. The support base 96 has a coupling guide 97 into which the slide couplers 31 fit so as to be able to slide. Arms 101 are disposed along the outside of the support base 96. The arms 101 elastically deform so as to press against the slide couplers 31 as needed. Only the slide couplers 31 rest on the support base 96, and the ring body 94 thereby floats.

Proximal ends of the arms 101 are fixed to the upper surface of the housing cap 23, and claw contacting ends 102 for contacting the second engaging teeth 87 of the inner ratchet 51 are formed at the distal ends of the arms 101. Pushing ends 103 are formed at positions on opposite sides from the claw contacting ends 102. The pushing ends 103 make contact with the slide couplers 31 of the ring stopper 26, and push against the slide couplers 31 as needed.

The housing cap 23 has a flange on the external periphery of the top thereof. The step part 91 and the arms 101 are formed on the upper surface of the flange, and a second spring cavity 105 for retaining the other end of the spring 47 is formed at the center of the flange. The housing cap 23 has a seal part 107 for sealing the fill opening 14, as shown in FIG. 5B.

The spring 47 is a compression spring for pressing the return cylinder 46 toward the key cylinder 16.

As shown in FIG. 3B, when the fill opening 14 is closed, the retaining protuberances 33 of the ring stopper 26 are not connected to the transmitting and interrupting groove 68 of the return cylinder 46.

The operation of the cap 11 according to the first embodiment will next be described based on FIGS. 5A through 5H. The operation of opening the cap 11 will first be described, followed by the operation of closing the cap 11. FIG. 5A shows a state in which the outer cap 21 is removed from the cap 11, and FIG. 5B shows a state in which the outer cap 21 is attached. FIGS. 2 through 4B will also be used in the description.

When the cap 11 is closed on the fill opening 14, the ring stopper 26 and the return cylinder 46 shown in FIG. 5B are not connected. When the cap 11 is opened, the key 12 is inserted into the key cylinder 16, and the key 12 is turned, whereupon the outer cap 21 and the housing cap 23 that is fitted in the fill opening 14 are coupled, and the outer cap 21 is rotated. The cap 11 can thereby be removed from the fill opening 14, and the fill opening 14 can be opened.

Specifically, when the key 12 is rotated, the return cylinder 46 that is connected to the key cylinder 16 rotates, and the return cylinder 46 is therefore advanced toward the housing cap 23 (in the direction of the arrow a4) by the guiding helical grooves 63. As a result, the return cylinder 46 moves against the spring 47 downward in the direction of the arrow a4 and bends the ring stopper 26 in the direction of the arrow a5.

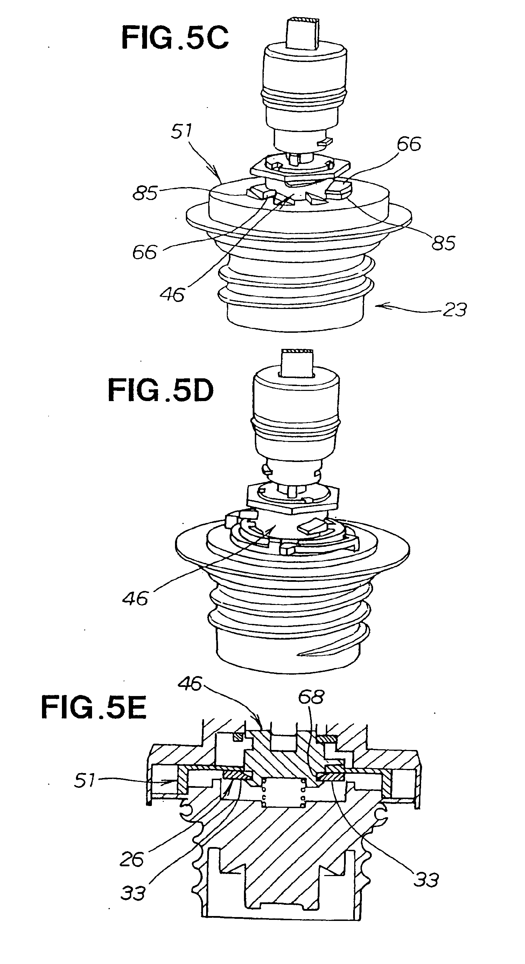

As shown in FIG. 5C, when the return cylinder 46 moves downward, the engaging bosses 66 of the return cylinder 46 engage with the first engaging teeth 85 of the inner ratchet 51. As a result, the outer cap 21 and the housing cap 23 become integrated, and the cap 11 can be opened (loosened) and closed (tightened).

At substantially the same time, the retaining protuberances 33 of the ring stopper 26 bend and spread toward the radial outside of the ring stopper 26, and fit in the transmitting and interrupting groove 68 of the return cylinder 46, as shown in FIGS. 5D and 5E. Consequently, retraction (ascent) of the return cylinder 46 is restricted (stopped) and rotation is thereby restricted.

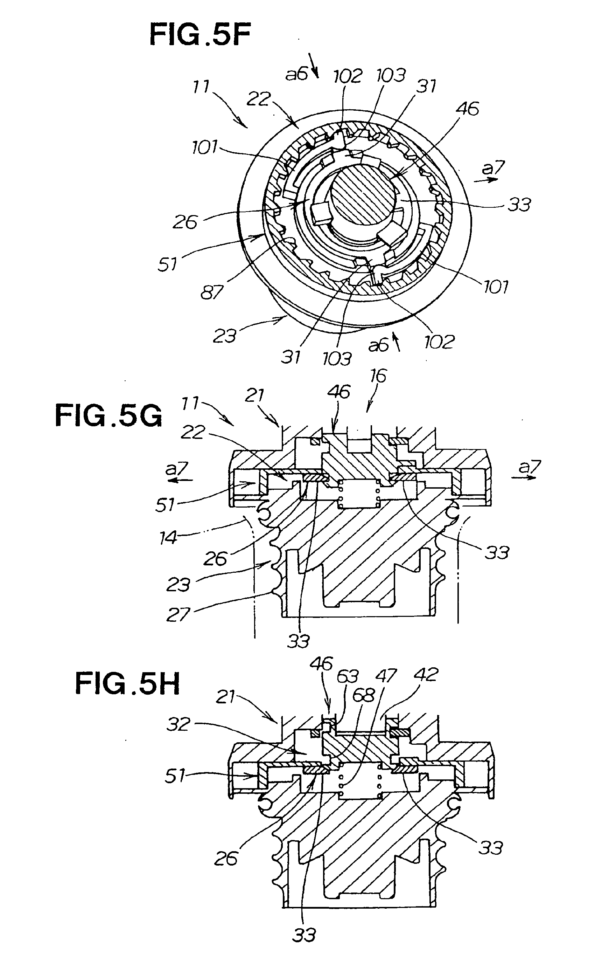

FIG. 5F shows the ratchet mechanism 22. Specifically, the outer cap 21 is removed along with a cross-section of the inner ratchet 51 and a cross-section of the return cylinder 46.

After fueling, the cap 11 is tightened in the fill opening 14. The tightening force (rotation force) is transmitted in the following sequence as shown in FIG. 2: outer cap 21 → guide 45 → return cylinder 46 → inner ratchet 51.

In FIG. 5F, the tightening force can be imparted because the ratchet mechanism 22 transmits the tightening force from the second engaging teeth 87 of the inner ratchet 51 to the claw contacting ends 102 of the arms 101, and from the arms 101 to the housing cap 23.

In the ratchet mechanism 22, when the tightening force reaches a predetermined force, the amount of bending of the arms 101 due to elastic deformation thereof increases, and the pushing ends 103 push the slide couplers 31 of the ring stopper 26 as indicated by the arrow a6. The diameter of the ring stopper 26 at the positions (0°, 180°) orthogonal to the slide couplers 31 therefore increases, and the retaining protuberances 33 move radially outward (in the direction of the arrow a7) from the ring stopper 26 as shown in FIG. 5G.

As a result, in the key origin return mechanism 32, the retaining protuberances 33 of the ring stopper 26 come out of the transmitting and interrupting groove 68 of the return cylinder 46, as shown in FIG. 5H. At the same time that the retaining protuberances 33 come out, the return cylinder 46 is moved back (raised) by the force of the spring 47 and counter-rotated by the guiding helical grooves 63.

As a result of this counter-rotation, the return cylinder 46 is rotated back to the origin angle position S (FIG. 2) in which the key cylinder 16 connected via the rotating part 42 is inserted. The key 12 can thus be removed from the key cylinder 16. In other words, when the cap 11 is closed, the key 12 can be removed, and the cap 11 can be prevented from being inadvertently left open.

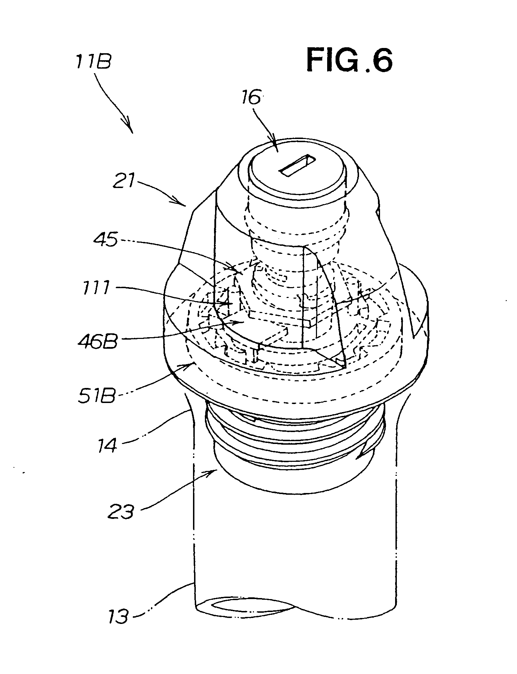

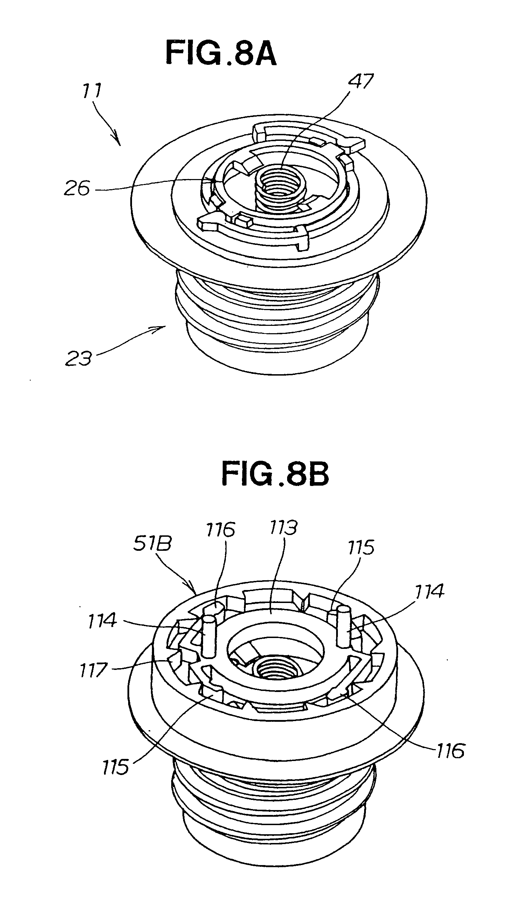

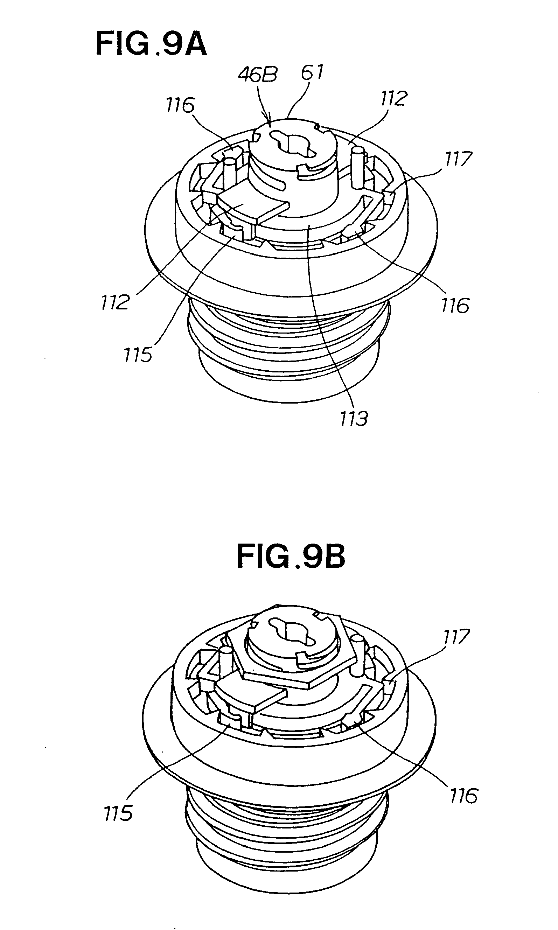

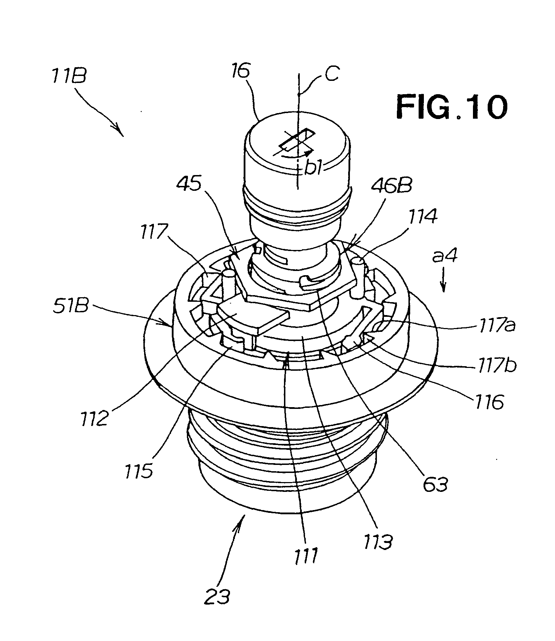

A second embodiment of the present invention will next be described based on FIGS. 6 through 10. In the description of the cap of the second embodiment, the same reference symbols are used to refer to constituent elements that are the same as those of the cap described in the first embodiment, and no redundant description thereof will be given. FIG. 10 shows the outer cap 21 in a free state (free spinning state), in which the outer cap 21 and the housing cap 23 are not integrated with each other.

The cap 11B of the second embodiment is provided with a return cylinder 46B, a locking ring 111, and an inner ratchet 51B. The return cylinder 46B is provided with a pair of L-shaped arms 112 that protrude radially outward from the column body 61 so as to face each other on the external periphery of the column body 61.

The locking ring 111 is provided with a ring part 113; pins 114 provided on the ring part 113; lock tabs 115 provided so as to be able to elastically deform along an external periphery of the ring part 113 from the vicinity of where the pins 114 are provided; and ratchet arms 116 provided in the opposite direction from the lock tabs 115 from the vicinity of where the pins 114 are provided. The distal ends of the pins 114 are fitted in the outer cap 21. When the cap 11B shown in FIG. 10 cannot be opened and closed, the arms 112 are interposed between the lock tabs 115 and the ring part 113.

The inner ratchet 51B is provided with second engaging teeth 87 formed on the upper half of the internal peripheral surface thereof, and lock engaging teeth 117 formed on the lower half of the internal peripheral surface thereof. The lock engaging teeth 117 are composed of sloped parts 117a, and raised parts 117b that are not tilted; i.e., that extend toward the radial center of the locking ring 111.

The operation of the cap 11B of the second embodiment will next be described.

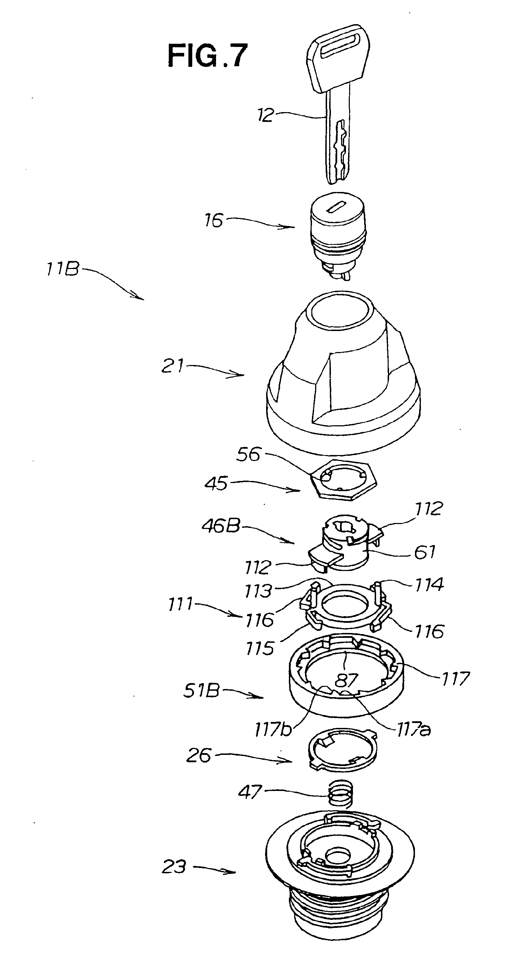

When the return cylinder 46B rotates together with the rotation (in the direction of the arrow b1) (FIG. 10) of the key 12 shown in FIG. 7 and moves downward (in the direction of the arrow a4), the arms 112 of the return cylinder 46B are inserted into the ratchet arms 116 of the locking ring 111. The ratchet arms 116 therefore have no space in which to bend toward the inside of the locking ring 111, and the movement (bending) thereof is locked.

As a result, when the cap 11B is opened (rotated left in the direction of the arrow b1), the ratchet arms 116 engage with the raised parts 117b of the lock engaging teeth 117, whereby the outer cap 21 and housing cap 23 are connected, and the cap 11B can be opened.

Conversely, when the cap 11B is closed (rotated right), the ratchet arms 116 engage with the sloped parts 117a of the lock engaging teeth 117, whereby the outer cap 21 and housing cap 23 are connected, and the cap 11B can be closed.

The rest of the mechanism involved after closing of the cap 11B is the same as in the first embodiment; the key 12 can be removed when the cap 11B is closed, and the cap 11B can be prevented from being inadvertently left open.

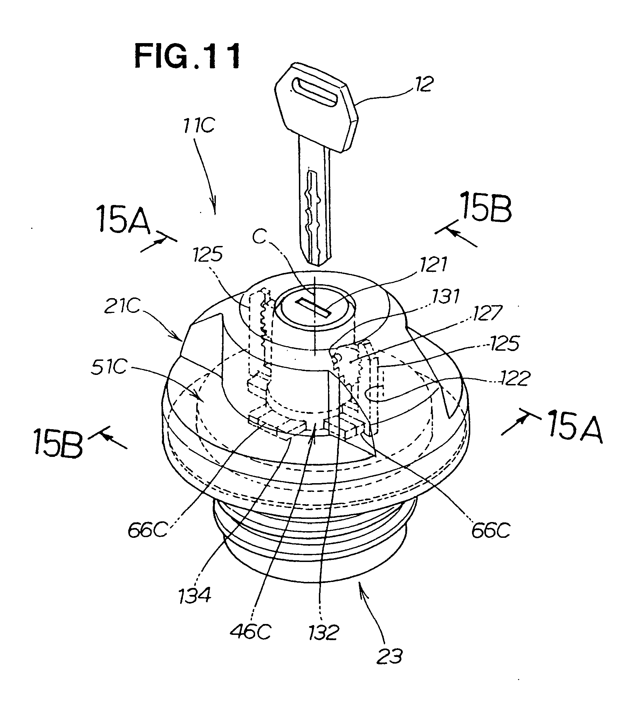

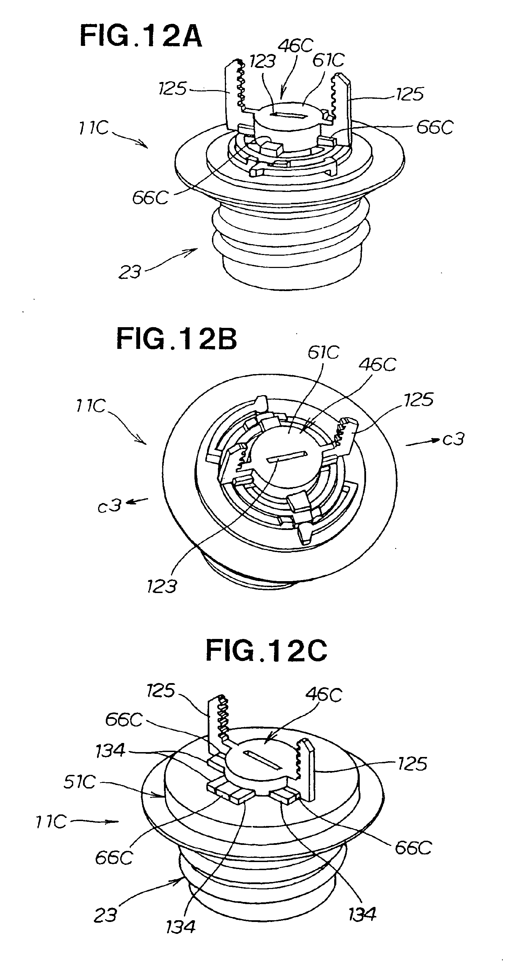

The cap 11C according to a third embodiment will next be described based on FIGS. 11 through 17B. In the description of the cap of the third embodiment, the same reference symbols are used to refer to constituent elements that are the same as those of the cap described in the first embodiment shown in FIGS. 1 through 6H, and no redundant description thereof will be given.

As shown in FIGS. 11 through 15B, the cap 11C of the third embodiment is provided with an outer cap 21C, a return cylinder 46C, and an inner ratchet 51C.

The outer cap 21C has a key insertion hole 121 for inserting the key 12, and slide grooves 122 formed so as to be communicated with the key insertion hole 121. The slide grooves 122 allow the return cylinder 46C to slide so as to be parallel to the axis line C of the cap 11C.

The return cylinder 46C is provided with a column body 61C that is disposed inside the slide grooves 122 communicated with the key insertion hole 121; a key tip fitting cavity 123 formed at the center of an upper surface of the column body 61C concentrically with the key insertion hole 121; a pair of L-shaped rack parts 125 provided so as to face the external peripheral surface of the column body 61C; key stoppers 127 having teeth 126 for meshing with teeth that are formed in the rack parts 125; four engaging bosses 66C formed at 90° intervals on the external peripheral surface of the lower end of the column body 61C so as to protrude radially outward; and the ring-shaped transmitting and interrupting groove 68 formed in the external peripheral surface of the lower end of the column body 61C. The rack parts 125 are guided along the slide grooves 122.

The key stoppers 127 are substantially fan-shaped, have cog support shafts 131 as relevant parts thereof, and are provided to the outer cap 21C so as to be able to rotate via the cog support shafts 131. The key stoppers 127 also have clamp parts 132 formed in the edges that hold the inserted key 12. The clamp parts 132 have cavities and protrusions formed therein for preventing the key 12 from slipping.

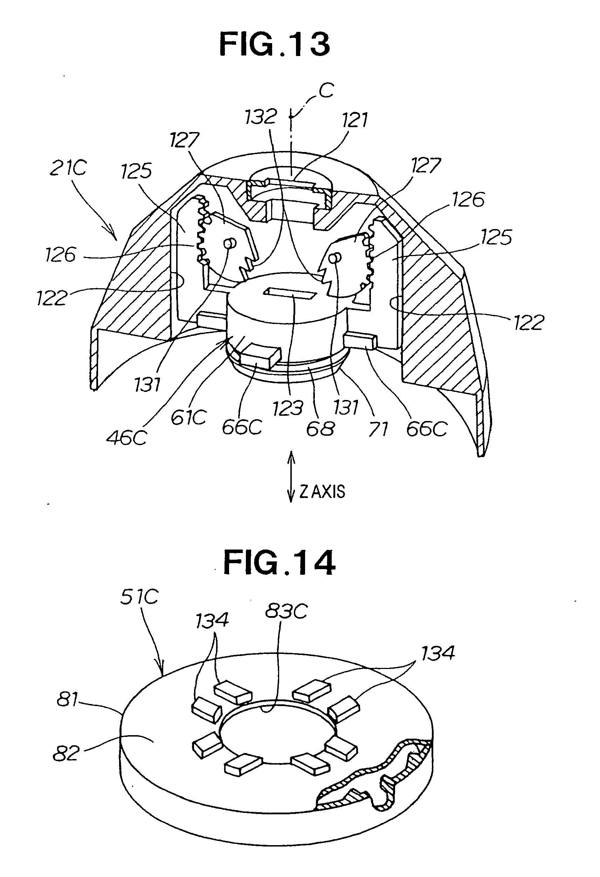

As shown in FIG. 14, the inner ratchet 51C has a circular opening 83C formed in the center of the disk part 82 of the body 81, and a plurality of rotation transmission projections 134 formed on the upper surface of the disk part 82 on the periphery of the circular opening 83C. The circular opening 83C allows passage through of the lower end of a column body 61C further downward than engaging bosses 66C that are provided to the column body 61C. The rotation transmission projections 134 are arranged so as to come in contact with both sides of the engaging bosses 66C.

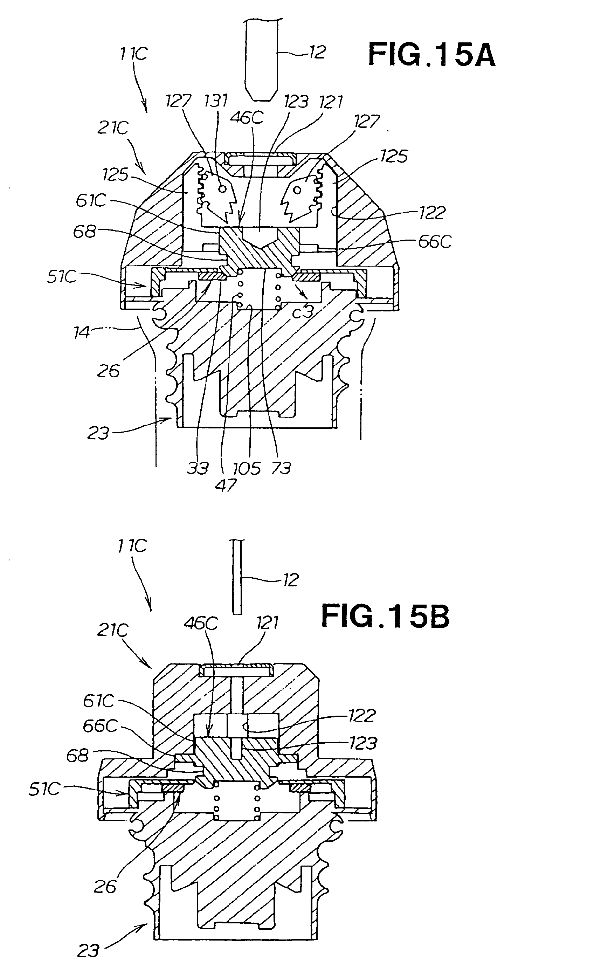

As shown in FIGS. 15A and 15B, when the cap 11C is closed on the fill opening 14, the retaining protuberances 33 of the ring stopper 26 are not fitted in the transmitting and interrupting groove 68 of the return cylinder 46C, and the outer cap 21C side and the housing cap 23 side are not connected.

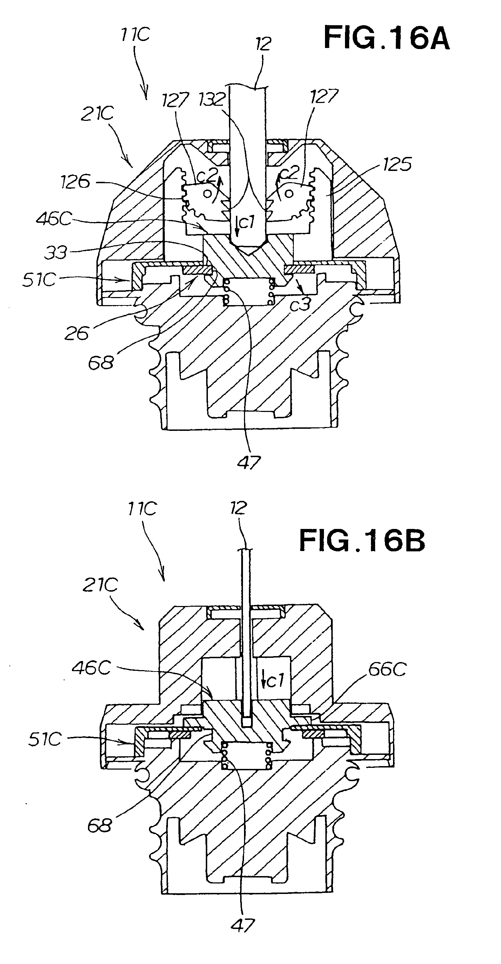

As shown in FIGS. 16A and 16B, when the key 12 is inserted, since the return cylinder 46C moves downward as indicated by the arrow c1, the key stoppers 127 rotate in the direction of the arrow c2 via the rack parts 125, and the key 12 is held clamped by the clamp parts 132.

At substantially the same time, the retaining protuberances 33 of the ring stopper 26 bend (in the direction of the arrow c3 in FIGS. 15A and 16A), and the retaining protuberances 33 fit into the transmitting and interrupting groove 68 of the return cylinder 46C. Consequently, retraction (ascent) of the return cylinder 46C is restricted, and the key stoppers 127 continue to clamp the key 12.

Furthermore, at the same time, the engaging bosses 66C of the return cylinder 46C fit and thereby mesh between the rotation transmission projections 134, 134 (FIG. 14) of the inner ratchet 51C, the outer cap 21C and the housing cap 23 become integrated, and the cap 11C can be opened (loosened) and closed (tightened).

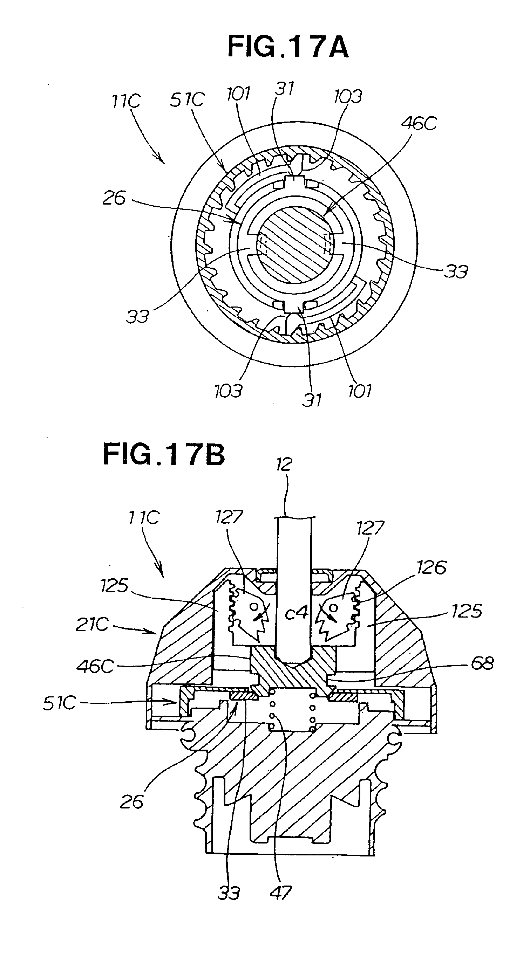

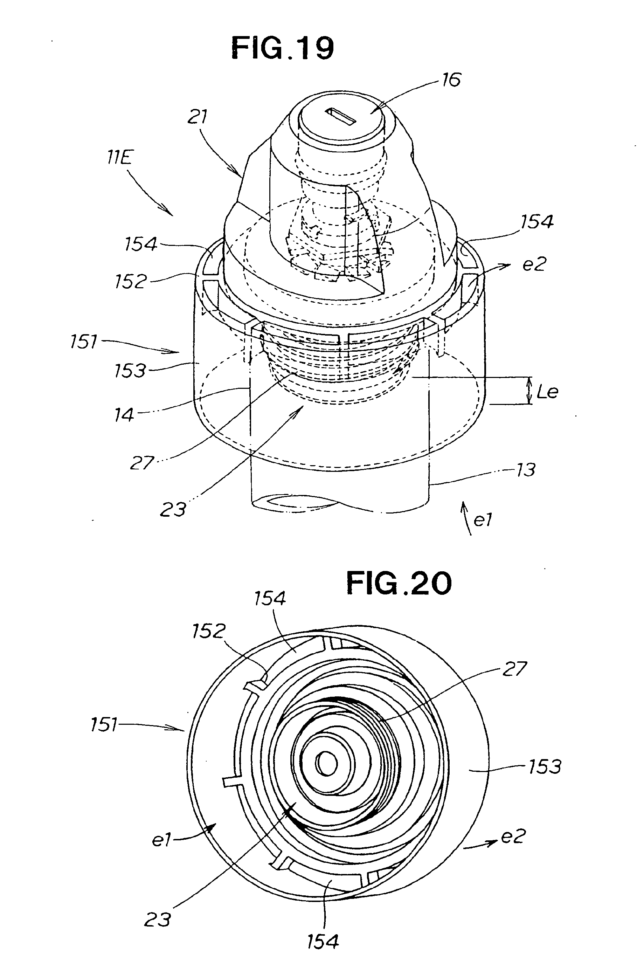

As shown in FIGS. 17A and 17B, after fueling, the keyed fuel cap 11C is tightened in the fill opening 14 (FIG. 1). In the cap 11C according to the third embodiment, since the pushing ends 103 of the arms 101 push the slide couplers 31 of the ring stopper 26 when the tightening force (rotation force) reaches a predetermined force, the ring stopper 26 bends (the diameter thereof increases at the orthogonal positions (0°, 180°)), and the retaining protuberances 33 move radially toward the outside of the ring stopper 26. The retaining protuberances 33 of the ring stopper 26 come out of the transmitting and interrupting groove 68 of the return cylinder 46C (FIG. 19B). At the same time, the return cylinder 46C is retracted (raised) by the force of the spring 47, and the key stoppers 127 are counter-rotated (in the direction of the arrow c4) by the rack parts 125. Consequently, the key 12 can be removed from the cap 11C. In other words, when the cap 11C is closed, the key 12 can be removed, and the cap 11C can be prevented from being inadvertently left open.

In the cap 11C according to the third embodiment, since the inner ratchet 51C and the return cylinder 46C are uncoupled, rotation force is not transmitted, and even when an attempt is made to rotate (loosen) open the outer cap 21C without using the key 12, the cap 11C cannot be removed from the fill opening 14.

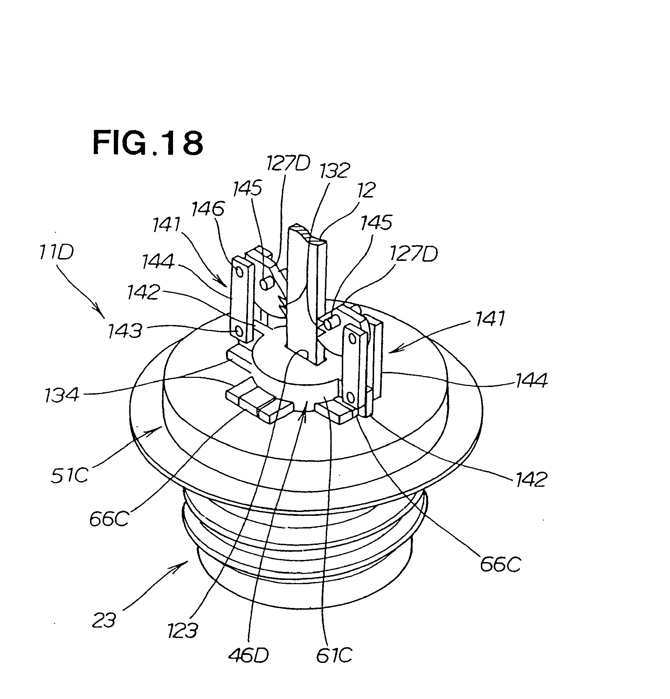

FIG. 18 shows the cap 11D according to a fourth embodiment. The same reference symbols are used to refer to constituent elements that are the same as those of the first through third embodiments, and no redundant description thereof will be given.

The cap 11D of the fourth embodiment is provided with an outer cap (substantially the same as the outer cap 21C of the third embodiment), a return cylinder 46D, and the inner ratchet 51C.

Describing the outer cap with reference to the outer cap 21C of the third embodiment, the outer cap is provided with the key insertion hole 121 for inserting the key 12, and slide grooves (substantially the same as the slide grooves 122 of the third embodiment shown in FIG. 13) for sliding the return cylinder 46D formed continuously with the key insertion hole 121 parallel to the axis line of the cap 11D.

The return cylinder 46D is provided with the column body 61C disposed inside the key insertion hole 121; the key tip fitting cavity 123; link mechanisms 141 provided on the external peripheral surface of the column body 61C; key stoppers 127D coupled to the link mechanisms 141; and the transmitting and interrupting groove 68 (FIG. 15A) connected to the lower end (other end) of the column body 61C. The link mechanisms 141 are fit into and guided by the slide grooves.

The link mechanisms 141 are provided with a pair of first arm parts 142 extending outward from the external peripheral surface of the column body 61C; and second arm parts 144 sandwiching the first arm parts 142 and coupled so as to be able to pivot via first link shafts 143.

The key stoppers 127D are provided with second link shafts 146 provided to the second arm parts 144; clamp support shafts 145 provided in the vicinity of the second link shafts 146; and the clamp parts 132 formed in the vicinity of the clamp support shafts 145 and facing the inserted key 12.

The cap 11 D of the fourth embodiment has the same operation and effects as the cap 11C of the third embodiment.

In the cap 11D of the fourth embodiment, since the return cylinder 46D is lowered when the key 12 is inserted, the key stoppers 127D are rotated by the link mechanisms 141, and hold and clamp the key 12. When the return cylinder 46D is retracted (raised), the key stoppers 127D are counter-rotated by the link mechanisms 141. Consequently, the key 12 can be removed from the cap 11D. In other words, when the cap is closed, the key 12 can be removed, and the cap can be prevented from being inadvertently left open.

In the fourth embodiment, when the inner ratchet 51C and the return cylinder 46D are uncoupled, rotation force is not transmitted, and even when an attempt is made to rotate (loosen) open the outer cap 21C without using the key 12, the cap 11 D cannot be removed from the fill opening 14.

FIGS. 19 and 20 show a collar 151 and cap 11E according to a fifth embodiment. The same reference symbols are used to refer to constituent elements that are the same as those of the cap of the first and second embodiments, and no redundant description thereof will be given.

The cap 11E according to the fifth embodiment is provided with a collar 151 having a radius larger than the radius of the fill opening 14, and a length longer by a length Le than the length of the helical portion 27, the collar 151 being formed continuously with the outer cap 21.

The collar 151 is composed of a top part 152 continuous with the outer cap 21, and a collar body 153 having a radius larger than the radius of the fill opening 14, the collar body 153 extending along the fuel filler tube 13 from the top part 152. A plurality of drainage ports 154 is formed in the top part 152.

The cap 11 E of the fifth embodiment has the same operation and effects as the cap 11 of the first embodiment.

In the cap 11E of the fifth embodiment, the helical portion 27 can be protected by the collar 151. For example, when the cap 11 E is removed from the fill opening 14 and hangs in contact with the vehicle body, since the collar 151 and the vehicle body are in contact, dirt or mud adhering to the vehicle body does not adhere to the helical portion 27. Furthermore, even when the cap 11E is placed on the vehicle body, a tire, or another place where dirt or mud adheres, the long collar 151 prevents dirt or mud from adhering to the helical portion 27.

Since drainage ports 154 are provided to the top part 152 of the collar 151, dirt or mud coming from below (in the direction of the arrow e1) escapes upward as indicated by the arrow e2 from the drainage ports 154. Consequently, dirt or mud coming from below does not build up in the top part 152.

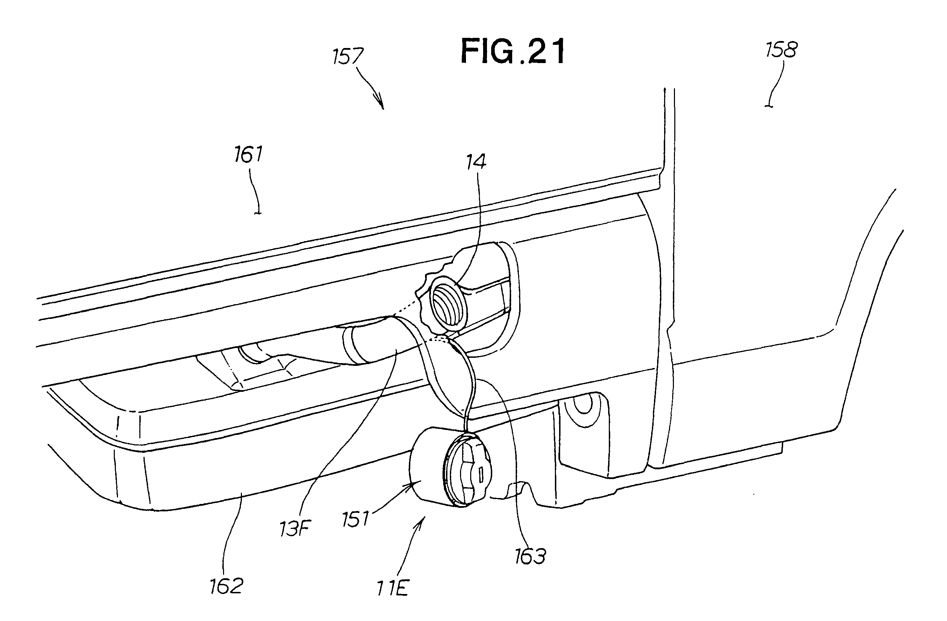

FIG. 21 shows an example of a vehicle provided with the cap 11 E according to the fifth embodiment. The vehicle 157 is a truck. The vehicle 157 is provided with a door 158, a load-carrying platform 161, a fuel tank 162, a fuel filler tube 13F of the fuel tank 162, and a strap 163 for suspending the cap 11E for closing the fill opening 14 of the fuel filler tube 13F.

The cap 11E of the fifth embodiment in which the collar 151 is employed has the advantage of preventing dirt or mud from adhering to the helical portion 27, and the advantage of preventing dirt or mud from building up in the top part 152.

The cap 11 of the present invention is employed in a fuel fill opening 14 in the embodiments described above, but can also be employed in a circular port of a tank other than a fuel tank.

### Industrial Applicability

The keyed fuel cap 11 of the present invention is suitable as a lockable cap 11 for sealing a fill opening 14 that is exposed to the outside of a vehicle.

### Legend

11 - cap; 12 - key; 14-fill opening; 16-key cylinder; 21-outer cap; 22-ratchet mechanism; 23-housing cap; 26-ring stopper; 27-helical portion; 31- slide couplers; 32-key origin return mechanism; 33- retaining protuberances

## Claims

1. A lockable cap (11) designed to threadedly engage with a fill opening for opening and closing the fill opening using a key (12), comprising:
a housing cap (23) having a helical portion (27) capable of threaded engagement with the fill opening;
an outer cap (21) integrally formed with a key cylinder (16) that allows insertion of the key;
a ring stopper (26) for coupling and decoupling the housing cap and the outer cap; and
a ratchet mechanism (22) for transmitting rotation from the outer cap to the housing cap **characterized in that** the ratched mechanism is also for guiding the ring stopper to bend in one direction,
wherein the ring stopper couples the housing cap and the outer cap through an opening operation of the cap relative to the fill opening by the key inserted in the key cylinder and uncouples the housing cap and the outer cap by deforming through an action of the ratchet mechanism as closing of the cap is completed.

2. The lockable cap of claim 1, wherein the ring stopper comprises:
a pair of slide couplers provided in opposed relation to each other so as to couple to the housing cap; and
a pair of retaining protuberances, provided orthogonal to a line passing over the slide couplers, for coupling with the outer cap by an opening operation of the key and for uncoupling from the outer cap by sliding of the slide couplers due to the action of the ratchet mechanism upon completion of a closing operation of the key.

3. The lockable cap of claim 2, wherein the lockable cap further comprises a return cylinder capable of rotation and vertical movement by the key and having an annular groove on an external periphery of a lower end thereof for engaging with and disengaging from the retaining protuberances of the ring stopper.

4. The lockable cap of claim 1, further comprising a collar provided continuously with a lower end of the outer cap and having a radius larger than a radius of the fill opening and a length longer than a length of the helical portion of the housing cap so as to cover the housing cap.

5. The lockable cap of claim 4, wherein the collar comprises a plurality of drainage ports formed in a top part toward the outer cap.

## Patentansprüche

1. Verriegelbarer Deckel (11), welcher dazu eingerichtet ist, mit einer Einfüllöffnung in Gewindeeingriff zu treten, um unter Verwendung eines Schlüssels (12) die Einfüllöffnung zu öffnen und zu schließen, umfassend:
einen Gehäusedeckel (23), welcher einen spiralförmigen Abschnitt (27) aufweist, welcher dazu in der Lage ist, mit der Einfüllöffnung in Gewindeeingriff zu treten;
einen Außendeckel (21), welcher integral mit einem Schlüsselzylinder (16) gebildet ist, welcher ein Einführen des Schlüssels gestattet;
einen Ringstopper (26) zum Verbinden und Trennen des Gehäusedeckels und des Außendeckels; und
einen Ratschenmechanismus (22) zum Übertragen einer Drehung von dem Außendeckel auf den Gehäusedeckel,
**dadurch gekennzeichnet, dass** der Ratschenmechanismus auch zum Führen des Ringstoppers vorgesehen ist, um sich in eine Richtung zu biegen,
wobei der Ringstopper den Gehäusedeckel und den Außendeckel durch eine Öffnungsbetätigung des Deckels relativ zu der Einfüllöffnung durch den in dem Schlüsselzylinder eingeführten Schlüssel verbindet und den Gehäusedeckel und den Außendeckel durch Verformen durch eine Betätigung des Ratschenmechanismus trennt, wenn das Schließen des Deckels abgeschlossen ist.

2. Verriegelbarer Deckel nach Anspruch 1,
wobei der Ringstopper umfasst:
ein Paar von Gleitkopplern, welche in entgegengesetzter Beziehung zueinander bereitgestellt sind, um den Gehäusedeckel zu verbinden; und
ein Paar von Rückhaltevorsprüngen, welche orthogonal zu einer Linie bereitgestellt sind, welche über die Gleitkoppler verläuft, um mit dem Außendeckel durch eine Öffnungsbetätigung des Schlüssels verbunden zu werden und von dem Außendeckel durch Schieben der Gleitkoppler aufgrund der Betätigung des Ratschenmechanismus auf eine Beendigung einer Schließbetätigung des Schlüssels hin getrennt zu werden.

3. Verriegelbarer Deckel nach Anspruch 2,
wobei der verriegelbare Deckel ferner einen Rückstellzylinder umfasst, welcher zu einer Drehung und einer vertikalen Bewegung durch den Schlüssel in der Lage ist und eine ringförmige Rille an einem Außenumfang eines unteren Endes davon aufweist, um mit den Rückhaltevorsprüngen des Ringstoppers in Eingriff zu treten und sich von diesen zu lösen.

4. Verriegelbarer Deckel nach Anspruch 1,
ferner umfassend einen Kragen, welcher durchgehend mit einem unteren Ende des Außendeckels bereitgestellt ist und einen Radius aufweist, welcher größer als ein Radius der Einfüllöffnung ist, und eine Länge aufweist, welche länger als eine Länge des spiralförmigen Abschnitts des Gehäusedeckels ist, um den Gehäusedeckel abzudecken.

5. Verriegelbarer Deckel nach Anspruch 4,
wobei der Kragen eine Mehrzahl von Abflussöffnungen umfasst, welche in einem oberen Teil in Richtung zum Außendeckel hin gebildet sind.

## Revendications

1. Capuchon verrouillable (11) conçu pour s'engager de façon vissée avec une ouverture de remplissage pour ouvrir et fermer l'ouverture de remplissage en utilisant une clé (12), comprenant:
un capuchon d'insertion (23) présentant une partie hélicoïdale (27) pouvant être engagée de façon vissée avec l'ouverture de remplissage;
un capuchon extérieur (21) formé intégralement avec un cylindre de clé (16) qui permet l'insertion de la clé;
un arrêt annulaire (26) pour coupler et découpler le capuchon d'insertion et le capuchon extérieur; et
un mécanisme de rochet (22) pour transmettre une rotation depuis le capuchon extérieur au capuchon d'insertion, **caractérisé en ce que** le mécanisme de rochet sert également à guider l'arrêt annulaire pour qu'il se plie dans une première direction,
dans lequel l'arrêt annulaire couple le capuchon d'insertion et le capuchon extérieur par l'intermédiaire d'une opération d'ouverture du capuchon par rapport à l'ouverture de remplissage par la clé insérée dans le cylindre de clé, et découple le capuchon d'insertion et le capuchon extérieur par une déformation sous l'action du mécanisme de rochet lorsque la fermeture du capuchon est accomplie.

2. Capuchon verrouillable selon la revendication 1, dans lequel l'arrêt annulaire comprend:
une paire de coupleurs coulissants prévus dans une relation opposée l'un à l'autre de manière à se coupler au capuchon d'insertion; et
une paire de protubérances de retenue, prévues orthogonales à une ligne passant au-dessus des coupleurs coulissants, pour se coupler avec le capuchon extérieur par une opération d'ouverture de la clé, et pour se découpler du capuchon extérieur en faisant coulisser les coupleurs coulissants sous l'action du mécanisme de rochet lors de l'accomplissement d'une opération de fermeture avec la clé.

3. Capuchon verrouillable selon la revendication 2, dans lequel le capuchon verrouillable comprend en outre un cylindre de retour qui est capable d'exécuter un mouvement rotatif et vertical par la clé, et comportant une rainure annulaire sur une périphérie extérieure d'une extrémité inférieure de celui-ci pour s'engager avec les protubérances de retenue de l'arrêt annulaire et se désengager de celles-ci.

4. Capuchon verrouillable selon la revendication 1, comprenant en outre un collier qui est prévu de façon continue avec une extrémité inférieure du capuchon extérieur et dont le rayon est plus grand qu'un rayon de l'ouverture de remplissage, et dont la longueur est plus grande qu'une longueur de la partie hélicoïdale du capuchon d'insertion de manière à couvrir le capuchon d'insertion.

5. Capuchon verrouillable selon la revendication 4, dans lequel le collier comprend une pluralité de ports de drainage qui sont formés dans une partie supérieure en direction du capuchon extérieur.
